# EUROPEAN PATENT SPECIFICATION

(11) **EP 3 843 451 B1**
(45) Date of publication and mention of the grant of the patent: **05.07.2023**
(21) Application number: 19852039.7
(22) Date of filing: 22.08.2019
(51) Int. Cl.: H04L 47/76, H04L 47/70, H04W 28/02

(54) **METHOD AND APPARATUS FOR ADJUSTING BANDWIDTH, COMMUNICATION DEVICE AND COMPUTER READABLE STORAGE MEDIUM**
VERFAHREN UND VORRICHTUNG ZUM EINSTELLEN DER BANDBREITE, DES KOMMUNIKATIONSGERÄTS UND DES COMPUTERLESBAREN SPEICHERMEDIUMS
PROCÉDÉ ET APPAREIL D'AJUSTEMENT DE LA BANDE PASSANTE, DISPOSITIF DE COMMUNICATION ET SUPPORT DE STOCKAGE LISIBLE PAR ORDINATEUR

(30) Priority: 23.08.2018 CN 201810967793
(43) Date of publication of application: 30.06.2021
(73) Proprietor: ZTE Corporation, shenzhen Guangdong 518057 (CN)
(72) Inventor: YANG, Yongbin, Shenzhen, Guangdong 518057 (CN)
(74) Representative: WBH Wachenhausen Patentanwälte PartG mbB
(86) International application number: PCT/CN2019/102079
(87) International publication number: WO 2020/038450

(56) References cited:
- WO-A1-2015/081534
- CN-A- 107 660 341
- CN-A- 107 682 135
- JP-A- 2016 116 184
- US-A1- 2017 054 595
- ORACLE et al.: "TS 23.501:PCF Architecture Alternatives", SA WG2 Meeting #121 S 2-173075, 19 May 2017 (2017-05-19), XP051281584,
- SAMSUNG: "Update of Solution 1.2 to Efficiently Support Multiple 3rd Parties", SA WG2 Meeting #116BIS S 2-164662, 2 September 2016 (2016-09-02), XP051130611,

## Description

### TECHNICAL FIELD

The present disclosure relates to the technical field of communication device, for example, to a method and an apparatus for adjusting bandwidth, a communication device and a computer-readable storage medium.

### BACKGROUND

As a new generation communication standard, the 5th generation mobile communication system (5G), presents multi-level and differentiated scenario application characteristics, such as the bandwidth focused by mobile Internet services, the need for low delay and jitter guarantee for autonomous driving services, the demanding reliability requirements for industrial control, and the huge number of connections supported by Internet of Things services, etc. In this regard, 5G reconstructs the access network, bearer network and core network, organizes different device processing units and physical deployment locations according to different service types, and constructs independent end-to-end network processing logics for different types of services through slicing on the same physical network.

As an important part of 5G end-to-end service path, 5G bearer network should meet different service requirements in multiple scenarios. At the same time, 5G is an open network, which needs to provide application requirements for vertical industries and leasing services, so 5G bearer network is required to support service isolation and independent operation and maintenance of slice network. Each bearer network slice bearing a different service is equivalent to an independent physical network.

If each service is built on a proprietary network device architecture, the operating cost will be very high. Network slicing technology enables operators to slice different virtual network structures on the basis of the same hardware. Based on such network structures, different services can be flexibly configured to meet different user needs. At the same time, after different network slices are isolated, the network authentication, network bandwidth, quality of service (QoS) and network security of different networks become independent of each other, and the error of one slice will not affect the communication of other slices.

Although these slices belong to different network devices logically, from the point of view of hardware resources, different slices will share the same physical resources, such as single board, port, etc., which may require slice management of physical resources.

Although there are many port management technologies in the field of packet transport network (PTN), the management methods of these port management technologies are static management, and the basic operating principle of the port management technologies is as follows.

A physical port is sliced into a plurality of slice logical ports with the same bandwidth according to a fixed bandwidth. For example, it is assumed that the bandwidth of a physical port is Q, and the physical port is divided into N slice logical ports based on a fixed bandwidth W, the bandwidth relation satisfies the formula: Q ≥ W ^{∗} N. After a physical port is slice into a plurality of slice logical ports with the same bandwidth, each of the slice logical ports may bear a slicing service, so that a physical port can bear a plurality of different services to meet the requirements of 5G communication.

However, when this fixed bandwidth method is used to manage ports, the actual bandwidths occupied by different services are often different at the slice logical ports with the same bandwidth. For example, the rate of services borne in some slice logical ports is large, and the actual bandwidth occupied by these slice logical ports is large; while the rate of services borne in some other slice logical ports is low, and the actual bandwidth occupied by these slice logical ports is small. However, when the bandwidth of services is fixed and the rate of services is large, the bandwidth in the slice logical port cannot meet the actual requirements, which causes congestion to the services and affects the user experience. When the rate of services is low, the bandwidth in the slice logical port is not fully utilized, which leads to insufficient utilization of hardware resources of the port and waste of resources. Especially in the case of multi-service bearer, if one service has a large bandwidth requirement and another service has a small bandwidth requirement, resources are wasted and user experience is reduced.

JP2016116184A discloses a system capable of flexibly utilizing a network resource. In a virtual network construction, a model in which physical or virtual network resource information is pooled is established. A virtual network 1305 can be constructed using pooled resource information 1304, and the resource information 1304 that is not used for the virtual network construction and left in a pool prepares another resource pool 1306 so that the resource information can be distributed. A resource pool 1306 at a distribution destination can be managed by a different user. The user constructs freely a virtual network 1307 and can further distribute the resource to different users.

While the above patent application may achieve its intended purposes, there is still a need for a new and improved method and apparatus for adjusting bandwidth.

### SUMMARY

This invention is defined by the appended claims. The present disclosure provide a method and an apparatus for adjusting bandwidth, a communication device and a computer-readable storage medium, solving the problems that a plurality of slice logical ports have a fixed bandwidth that cannot be adjusted dynamically resulting in the bandwidth of some of the slice logical ports cannot meet the actual requirements which causes congestion to the services and affects the user experience, while the bandwidth of some of other slice logical ports cannot be fully utilized which causes waste of resources.

The present disclosure provide a method for adjusting bandwidth, including:
using a slice logical port as a bandwidth borrowing logical port in response to monitoring that the slice logical port meets a preset bandwidth borrowing condition;
searching for, in a physical port to which the bandwidth borrowing logical port belongs, a slice logical port that meets a preset bandwidth lending condition to act as a bandwidth lending logical port; and
extracting bandwidth from a bandwidth of the bandwidth lending logical port according to a preset bandwidth lending rule and allocating the extracted bandwidth to the bandwidth borrowing logical port;
the preset bandwidth borrowing condition comprises that: an actual flow rate of services borne by the slice logical port is greater than a maximum flow rate threshold corresponding to the slice logical port;
the preset bandwidth lending condition comprises that: the actual flow rate of services borne by the slice logical port is less than a minimum flow rate threshold corresponding to the slice logical port.

The present disclosure further provide a communication device, including: a processor, a memory, and a communication bus. The communication bus is configured for communication between the processor and the memory. The processor is configured to execute at least one program stored in the memory to implement the method for adjusting bandwidth described above.

The present disclosure further provide a computer readable storage medium storing a computer executable instruction, which is used to carry out the method for adjusting bandwidth described above.

### BRIEF DESCRIPTION OF DRAWINGS

Fig. 1 is a basic schematic flowchart of a method for adjusting bandwidth according to embodiment one of the present disclosure;
Fig. 2 is a schematic flowchart of bandwidth lending according to embodiment two of the present disclosure;
Fig. 3 is a schematic flowchart of bandwidth returning according to embodiment two of the present disclosure;
Fig. 4 is a two-dimensional graph of a flow rate of services according to embodiment three of the present disclosure;
Fig. 5 is a two-dimensional graph of another flow rate of services according to embodiment three of the present disclosure;
Fig. 6 is a schematic structural diagram of an apparatus for adjusting bandwidth according to embodiment four of the present disclosure; and
Fig. 7 is a schematic structural diagram of a communication device according to embodiment five of the present disclosure.

### DETAILED DESCRIPTION

Embodiments of the present disclosure are described with reference to the accompanying drawings. However, the concept of the present disclosure may be embodied in many different forms, and is not limited to the illustrated embodiments. Throughout the description and the drawings, the same reference numerals and marks represent the same or similar elements.

Various elements or operations are described herein using the terms first, second, etc., but should not be limited by these terms. These terms are used only to distinguish one element or operation from another. For example, the first logical port may be referred to as a second logical port, and similarly, the second logical port may be referred to as a first logical port without departing from the teachings of the present disclosure.

The terms used herein are merely intended to describe embodiments and are not intended to limit the concept of the present disclosure. As used herein, singular forms "a", "one", and "the" are also expected to include plural forms unless the context otherwise indicates. When used in the description, the term "comprise" or "include" specifies the existence of the stated features, areas, parts, steps, operations, elements, and/or components, but does not exclude the existence or addition of one or more other features, areas, parts, steps, operations, elements, components, and/or combinations thereof.

Unless otherwise defined, all terms used herein, including technical and scientific terms, have the same meanings as understood by those having ordinary skill in the art. Terms defined, for example, in a commonly used dictionary should be interpreted as having meanings consistent with their meanings in the context of the related art and/or the present disclosure, and will not be interpreted in an idealized or formal sense unless defined herein.

The embodiments of the present disclosure will be described below with reference to the drawings.

### Embodiment one:

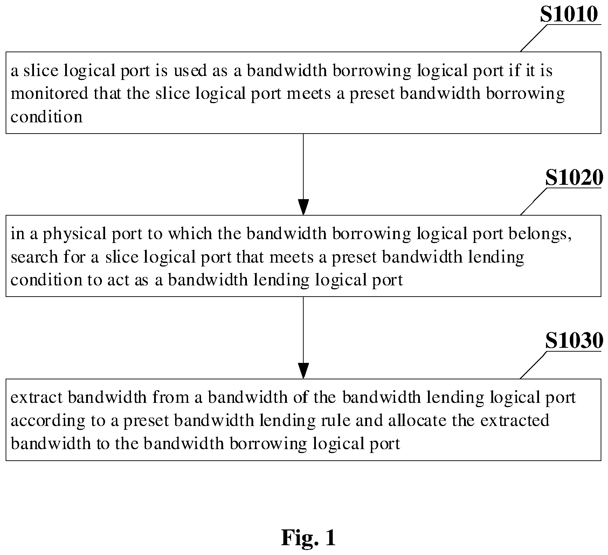

Referring to Fig. 1, Fig. 1 is a basic schematic flowchart of a method for adjusting bandwidth according to embodiment one of the present disclosure, including steps of S1010, S1020 and S 1030.

At 51010, a slice logical port is used as a bandwidth borrowing logical port if it is monitored that the slice logical port meets a preset bandwidth borrowing condition.

In this embodiment, a communication device will monitor situations of all slice logical ports recorded in the communication device. In this embodiment, the preset bandwidth borrowing condition includes that: an actual flow rate of services borne by the slice logical port is greater than a maximum flow rate threshold corresponding to the slice logical port. Therefore, in this embodiment, the communication device will monitor whether the actual flow rates of services of a plurality of slice logical ports reach the maximum flow rate thresholds corresponding to the plurality of slice logical ports.

In this embodiment, the flow rate of services may refer to the data transfer rate of services borne by the slice logical port. In practical application, the data transfer rate is positively correlated with bandwidth, that is, the greater the data transfer rate, the greater the bandwidth occupied by the data transfer rate.

In this embodiment, the communication device may monitor the actual flow rates of services of all slice logical ports recorded in the communication device, and compare the monitored actual flow rates of services of the plurality of slice logical ports with the maximum flow rate thresholds corresponding to the plurality of slice logical ports, so as to monitor whether the actual flow rates of services of the plurality of slice logical ports reach the maximum flow rate thresholds corresponding to the plurality of slice logical ports.

In this embodiment, in order to ensure that the slice logical port really needs to expand bandwidth, not just that the flow rate of services at a certain instant is greater than the maximum flow rate threshold, the preset bandwidth borrowing condition may be set as follows: the actual flow rate of services borne by the slice logical port is greater than the maximum flow rate threshold corresponding to the slice logical port within a preset time period (for example, within 2 minutes).

In this embodiment, the maximum flow rate thresholds corresponding to the plurality of slice logical ports may be the same, that is, engineers may set a value as the maximum flow rate threshold corresponding to each of the plurality of slice logical ports. In this embodiment, the maximum flow rate thresholds corresponding to the plurality of slice logical ports may also be different, that is, the maximum flow rate thresholds corresponding to different slice logical ports may also be different. In this embodiment, engineers may set the maximum flow rate thresholds corresponding to the plurality of slice logical ports according to the actual situations of the services borne by the plurality of slice logical ports. In an embodiment, a slice logical port bears only one service.

At S1020, in a physical port to which the bandwidth borrowing logical port belongs, a slice logical port that meets a preset bandwidth lending condition is searched for to act as a bandwidth lending logical port.

In this embodiment, a slice logical port table may be set in the communication device to determine which slice logical ports correspond to the physical port to which the bandwidth borrowing logical port belongs.

In this embodiment, the preset bandwidth lending condition includes that: the actual flow rate of services borne by the slice logical port is less than a minimum flow rate threshold corresponding to the slice logical port. That is, after determining which slice logical ports correspond to the physical port to which the bandwidth borrowing logical ports belong, the communication device may detect, for these slice logical ports, whether there is a slice logical port with the actual flow rate of services being less than the corresponding minimum flow rate threshold.

In this embodiment, in order to ensure that the slice logical port can lend bandwidth, not just that the flow rate of services at a certain instant is less than the minimum flow rate threshold, the preset bandwidth lending condition may be set as follows: the actual flow rate of services borne by the slice logical port is less than the minimum flow rate threshold corresponding to the slice logical port within a preset time period (for example, within 2 minutes).

Similar to the maximum flow rate thresholds corresponding to the plurality of slice logical ports, the minimum flow rate thresholds corresponding to the plurality of slice logical ports in this embodiment may be the same, that is, engineers may set a value as the minimum flow rate threshold corresponding to each of the plurality of slice logical ports. In this embodiment, the minimum flow rate thresholds corresponding to the plurality of slice logical ports may also be different, that is, the minimum flow rate thresholds corresponding to different slice logical ports may also be different. In this embodiment, engineers may set the minimum flow rate thresholds corresponding to the plurality of slice logical ports according to the actual situations of the services borne by the plurality of slice logical ports.

In practical applications, there may be some special services, such as security services, very important person (VIP) services, etc. These services have high priority and it may need to ensure that their bandwidth is sufficient. Therefore, in this embodiment, different levels may be set for different slice logical ports according to the services borne by different slice logical ports. For a slice logical port with a level greater than a preset level threshold, it may be set that: the slice logical port cannot be used as a bandwidth lending logical port.

In an embodiment, slice logical ports with a level less than or equal to the preset level threshold may be screened out after all slice logical ports corresponding to the physical port to which the bandwidth borrowing logical port belongs are determined, and slice logical ports that meet the preset bandwidth lending condition may be searched for in the slice logical ports with a level less than or equal to the preset level threshold to act as the bandwidth lending logical ports. Alternatively, slice logical ports with a level less than or equal to the preset level threshold may be screened out from slice logical ports that meet the preset bandwidth lending condition after the slice logical ports that meet the preset bandwidth lending condition are searched out.

At S1030, bandwidth is extracted from a bandwidth of the bandwidth lending logical port and allocated to the bandwidth borrowing logical port according to a preset bandwidth lending rule.

In this embodiment, the quantity of bandwidth lent by the bandwidth lending logical port to the bandwidth borrowing logical port (i.e., the bandwidth extracted from the bandwidth of the bandwidth lending logical port) may be predetermined. In an embodiment, a preset bandwidth lending proportion of bandwidth or a preset bandwidth lending quantity of bandwidth may be extracted from the bandwidth of the bandwidth lending logical port according to a preset bandwidth lending proportion or a preset bandwidth lending quantity and allocated to the bandwidth borrowing logical port. For example, it is assumed that the preset bandwidth lending proportion is 10% and the bandwidth of the bandwidth lending logical port is 10 Gbps, then 1 Gbps of bandwidth will be extracted from the bandwidth of the bandwidth lending logical port and allocated to the bandwidth borrowing logical port.

In this embodiment, the quantity of bandwidth lent by the bandwidth lending logical port to the bandwidth borrowing logical port may also be determined according to the actual data transfer situation of services borne by the bandwidth lending logical port. In an embodiment, a difference between the actual flow rate of services borne by the bandwidth lending logical port within a preset time period and the minimum flow rate threshold corresponding to the bandwidth lending logical port may be calculated, and then a bandwidth corresponding to the difference may be calculated, and the bandwidth corresponding to the difference may be extracted from the bandwidth of the bandwidth lending logical port and allocated to the bandwidth borrowing logical port.

The calculation of the difference between the actual flow rate of services borne by the bandwidth lending logical port within the preset time period and the minimum flow rate threshold corresponding to the bandwidth lending logical port may be the calculation of a difference between an average value of the actual flow rate of services borne by the bandwidth lending logical port within the preset time period and the minimum flow rate threshold corresponding to the bandwidth lending logical port or the calculation of a difference between a peak value (maximum or minimum value) of the actual flow rate of services borne by the bandwidth lending logical port within the preset time period and the minimum flow rate threshold corresponding to the bandwidth lending logical port.

For example, it is assumed that the bandwidth of the bandwidth lending logical port is 10 Gbps, the minimum flow rate threshold is 384 MB/s, and the maximum value of the actual flow rate of services within the preset time period is 256 MB/s, then the difference is 128 MB/s, and the corresponding bandwidth is 1 Gbps, and then 1 Gbps of bandwidth is extracted from the bandwidth lending logical port and allocated to the bandwidth borrowing logical port.

Since there is a unique correspondence between flow rate and bandwidth, the maximum bandwidth threshold or the minimum bandwidth threshold may be used instead of the maximum flow rate threshold and the minimum flow rate threshold, which are essentially equivalent.

In addition, the essence of monitoring the actual flow rate of services borne by the slice logical port is to obtain the occupied bandwidth of services borne by the slice logical port, so directly monitoring the occupied bandwidth of services borne by the slice logical port and monitoring the actual flow rate of services borne by the slice logical port are also essentially equivalent.

In this embodiment, in the process of determining the bandwidth borrowing logical port, the bandwidth borrowing quantity of the bandwidth borrowing logical port may also be determined at the same time. Then, in the process of extracting a bandwidth from the bandwidth of the bandwidth lending logical port according to the preset bandwidth lending rule and allocating the extracted bandwidth to the bandwidth borrowing logical port, it is detected whether the total bandwidth extracted from the bandwidth lending logical ports matches with the bandwidth borrowing quantity, and it is detected whether bandwidth has been extracted from bandwidths of all the bandwidth lending logical ports according to the preset bandwidth lending rule and allocated to the bandwidth borrowing logical por. If it is detected that the total bandwidth extracted from the bandwidth lending logical port matches with the bandwidth borrowing quantity, or bandwidth has been extracted from all the bandwidth lending logical ports according to the preset bandwidth lending rule, it indicates that bandwidth has been lent out, the lending process needs to be terminated, and the step of extracting a bandwidth from the bandwidth lending logical port according to the preset bandwidth lending rule and allocating the extracted bandwidth to the bandwidth borrowing logical port is not continued. Whether the extracted total bandwidth matches with the bandwidth borrowing quantity may be determined by setting a matching condition. In this embodiment, the matching condition may be set as follows: the extracted total bandwidth is greater than or equal to the bandwidth borrowing quantity, that is, matching. Alternatively, the matching condition may be set as follows: the extracted total bandwidth is greater than or equal to a difference between the bandwidth borrowing quantity and the tolerable quantity, for example, if the extracted total bandwidth is 2 Gbps, the bandwidth borrowing quantity is 2.1 Gbps and the tolerable quantity is 0.1 Gbps, it may be considered that the extracted total bandwidth matches with the bandwidth borrowing quantity.

In this embodiment, the communication device may determine the bandwidth borrowing quantity to be borrowed based on the difference between the actual flow rate of services borne by the bandwidth borrowing logical port and the corresponding maximum flow rate threshold. For example, it is assumed that the actual flow rate of services borne by the bandwidth borrowing logical port is 1280 MB/s (i.e., 10 Gbps) and the maximum flow rate threshold is 8 Gbps, then the bandwidth borrowing quantity is determined to be 2 Gbps.

In this embodiment, the bandwidth borrowing quantity may also be preset. That is, for the bandwidth borrowing logical port, the bandwidth borrowing quantity is preset, such as 1 Gbps. In this embodiment, the bandwidth borrowing quantity may also not be set, and the quantity of bandwidth that can be borrowed by the bandwidth borrowing logical port is determined by the bandwidth that can be lent by the bandwidth lending logical port.

In the actual service operation and management process, due to the huge services, the requirements for device management will be very high and the management process will be complicated if the bandwidth is borrowed from a plurality of slice logical ports. Therefore, in an embodiment, it may be set as follows: if two or more slice logical ports that meet the preset bandwidth lending condition are searched out, one of the two or more slice logical ports that meet the preset bandwidth lending condition is selected as the bandwidth lending logical port; alternatively, if a slice logical port that meets the preset bandwidth lending condition is searched out, the slice logical port may be used as the bandwidth lending logical port, and then the search may be terminated. In this way, it is ensured that only one bandwidth lending logical port is used for lending bandwidth in one process of bandwidth borrowing and lending, which is convenient for device management.

In this embodiment, also, due to the huge services in the actual service operation and management process, the requirements for device management will be very high and the management process will be complicated if bandwidth is lent from a slice logical port for many times. Therefore, in an embodiment, it may be set as follows: if a slice logical port has lent bandwidth, the slice logical port may no longer be used as a bandwidth lending logical port. In this case, in the process of searching for, in a physical port to which the bandwidth borrowing logical port belongs, a slice logical port that meets the preset bandwidth lending condition to act as a bandwidth lending logical port, slice logical ports with the actual flow rate of services borne by the slice logical port less than the minimum flow rate threshold corresponding to the slice logical port are searched for in the physical port to which the bandwidth borrowing logical port belongs, and a slice logical port without lending bandwidth is determined in the searched slice logical ports and used as the bandwidth lending logical port.

Alternatively, slice logical ports without lending bandwidth may be searched out from the physical port to which the bandwidth borrowing logical port belongs, and a slice logical port with the actual flow rate of services borne by the slice logical port less than the minimum flow rate threshold corresponding to the slice logical port is searched for among the slice logical ports without lending bandwidth to act as the bandwidth lending logical port.

In order to ensure that the communication device can distinguish which slice logical ports have lent bandwidth, a flag may be set for the slice logical port in the process of lending bandwidth, to determine that the slice logical port has lent bandwidth. In this embodiment, the flag may be cleared after all the bandwidth lent by the slice logical port is returned.

In this embodiment, the minimum flow rate threshold is n% of the flow rate corresponding to the current actual bandwidth of the slice logical port, and n is greater than 0 and less than 100; the maximum flow rate threshold is m% of the flow rate corresponding to the current actual bandwidth of the slice logical port, and m is greater than 0 and less than 100. That is, in this embodiment, the minimum flow rate threshold and/or the maximum flow rate threshold corresponding to the slice logical port may be dynamically updated with the borrowing or lending of the slice logical port bandwidth.

In order to ensure that the remaining bandwidth of the bandwidth lending logical port after lending bandwidth can still fully meet the needs of services borne by the bandwidth lending logical port, in an embodiment, the bandwidth lending logical port may be detected after lending bandwidth to determine whether the remaining bandwidth is sufficient.

In an embodiment, the minimum flow rate threshold corresponding to the bandwidth lending logical port may be updated with the actual bandwidth of the bandwidth lending logical port after lending bandwidth. In an embodiment, the minimum flow rate threshold may be set to be n% of the flow rate corresponding to the current actual bandwidth of the slice logical port.

In this way, after the bandwidth lending logical port lends bandwidth, the actual bandwidth of the bandwidth lending logical port will decrease, and the corresponding minimum flow rate threshold will also decrease. At this time, it may be detected whether the current actual flow rate of services borne by the bandwidth lending logical port is greater than the current minimum flow rate threshold corresponding to the bandwidth lending logical port. If the current actual flow rate of services borne by the bandwidth lending logical port is greater than the current minimum flow rate threshold corresponding to the bandwidth lending logical port, it indicates that the remaining bandwidth of the bandwidth lending logical port after lending bandwidth cannot fully meet the needs of services borne by the bandwidth lending logical port, so it is determined that this bandwidth lending of the bandwidth lending logical port is invalid, and the bandwidth lent by the bandwidth lending logical port is reclaimed. If the current actual flow rate of services borne by the bandwidth lending logical port is less than or equal to the current minimum flow rate threshold corresponding to the bandwidth lending logical port, it indicates that the remaining bandwidth after lending can still fully meet the needs of services borne by the bandwidth lending logical port, and this lending is effective.

After bandwidth is extracted from the bandwidth lending logical port according to the preset bandwidth lending rule and allocated to the bandwidth borrowing logical port, the communication device may monitor whether the preset bandwidth returning condition is triggered. If the preset bandwidth returning condition is triggered, the bandwidth allocated to the bandwidth borrowing logical port is returned to the bandwidth lending logical port.

In this embodiment, the preset bandwidth returning condition includes at least one of the following conditions.

Condition one: the actual flow rate of the bandwidth borrowing logical port is less than the current minimum flow rate threshold corresponding to the bandwidth borrowing logical port.

Condition two: the actual flow rate of services borne by the bandwidth lending logical port is greater than the current maximum flow rate threshold corresponding to the bandwidth lending logical port.

Condition three: a time limit of bandwidth lending has been reached.

Condition four: an abnormal adjustment of bandwidth by the physical port is detected.

In this embodiment, if condition one is triggered, it indicates that the current remaining bandwidth of the bandwidth borrowing logical port is sufficient, and it may not need to borrow bandwidth at all. Therefore, the communication device will return the bandwidth borrowed by the bandwidth borrowing logical port to the bandwidth lending logical ports that lend bandwidth to the bandwidth borrowing logical port, respectively. For example, it is assumed that a bandwidth borrowing logical port borrows 1 Gbps, 2 Gbps and 1 Gbps of bandwidth from a slice logical port A, a slice logical port B and a slice logical port C respectively, then 1 Gbps of bandwidth will be returned to the slice logical port A, 2 Gbps of bandwidth will be returned to the slice logical port B and 1 Gbps of bandwidth will be returned to the slice logical port C.

In this embodiment, if condition two is triggered, it indicates that there is a risk that the current remaining bandwidth of the bandwidth lending logical port cannot meet the requirements for services borne by the bandwidth lending logical port, so the communication device will return the bandwidth lent by the bandwidth lending logical port from the bandwidth borrowing logical port to which the bandwidth lending logical port lends the bandwidth. For example, it is assumed that a bandwidth lending logical port 1 lends 2 Gbps of bandwidth to a bandwidth borrowing logical port A and 1 Gbps of bandwidth to a bandwidth borrowing logical port B, then 2 Gbps of bandwidth will be returned to the bandwidth lending logical port 1 from the bandwidth of the bandwidth borrowing logical port A and 1 Gbps of bandwidth will be returned to the bandwidth lending logical port 1 from the bandwidth of the bandwidth borrowing logical port B. In an embodiment, when the slice logical port may only lend bandwidth once, there may be only one bandwidth borrowing logical port corresponding to the bandwidth lending logical port.

In this embodiment, if condition three is triggered, there may be a situation that the bandwidth lending logical port does not actually need to be returned bandwidth. Therefore, a detection may be performed. Before the bandwidth allocated to the bandwidth borrowing logical port is returned to the bandwidth lending logical port, it may be detected whether the actual flow rate of services borne by the bandwidth lending logical port is greater than or equal to the current minimum flow rate threshold corresponding to the bandwidth lending logical port. If it is detected that the actual flow rate of services borne by the bandwidth lending logical port is greater than or equal to the current minimum flow rate threshold corresponding to the bandwidth lending logical port, the bandwidth allocated to the bandwidth borrowing logical port is returned to the bandwidth lending logical port; and if it is detected that the actual flow rate of services borne by the bandwidth lending logical port is less than the current minimum flow rate threshold corresponding to the bandwidth lending logical port, it indicates that the bandwidth lending logical port may not actually need to be returned bandwidth, and bandwidth may be continued to be lent without being returned.

In this embodiment, the communication device may record the corresponding borrowing and lending relationships. In an embodiment, the communication device may record information such as lending time and lending time limit, etc. If it is detected that the bandwidth lending logical port may not need to be returned the lent bandwidth and bandwidth may be continued to be lent, the communication device may update information such as the corresponding lending time, lending time limit, etc.

In this embodiment, the bandwidth lending, bandwidth borrowing, and bandwidth extraction and allocation to the bandwidth borrowing logical port are essentially the reallocation of the bandwidth between the bandwidth lending logical port and the bandwidth borrowing logical port by the communication device.

In this embodiment, if condition four is triggered, it indicates that there is an error in the execution process of the communication device. In this case, the bandwidths of all the bandwidth borrowing logical ports in the communication device may be returned to the bandwidth lending logical ports. This operation is essentially a bandwidth reset operation.

According to the method for adjusting bandwidth provided by the embodiments of the disclosure, bandwidths of a plurality of slice logical ports corresponding to the same physical port can be dynamically allocated by monitoring whether a plurality of slice logical ports meet a preset bandwidth borrowing condition, using a slice logical port as a bandwidth borrowing logical port if it is monitored that the slice logical port meet the preset bandwidth borrowing condition, searching for a slice logical port that meets a preset bandwidth lending condition in a physical port to which the bandwidth borrowing logical port belongs, to act as a bandwidth lending logical port, and then extracting a bandwidth from the bandwidth lending logical port according to a preset bandwidth lending rule and allocating the bandwidth to the bandwidth borrowing logical port. If a slice logical port meets the preset bandwidth borrowing condition, it indicates that the bandwidth of the slice logical port cannot meet the actual requirements of services borne by the slice logical port, and it may need to borrow bandwidth from other slice logical ports to expand the bandwidth. If a slice logical port meets the preset bandwidth lending condition, it indicates that the bandwidth of the slice logical port exceeds the actual requirements of services borne by the slice logical port, and there is a waste of resources, so a certain bandwidth may be lent to the slice logical port that meets the preset bandwidth borrowing condition. If it is monitored that there is a bandwidth borrowing logical port that needs to expand bandwidth, a bandwidth lending logical port which can lend bandwidth is searched for in the physical port to which the bandwidth borrowing logical port belongs, and bandwidth is extracted from the bandwidth lending logical port and allocated to the bandwidth borrowing logical port, so that the bandwidth of the bandwidth borrowing logical port can be expanded, which avoids congestion of services borne by the bandwidth borrowing logical port and improves user experience, at the same time, the bandwidth of the bandwidth lending logical port can be utilized more reasonably, and the hardware resources of the port can be fully utilized, which reduces the waste of resources.

### Embodiment two:

In this embodiment, based on embodiment one, the scheme of the present disclosure is exemplified through a bandwidth adjustment process.

In this embodiment, it is assumed that one bandwidth borrowing logical port can only borrow bandwidth from one bandwidth lending logical port; and one bandwidth lending logical port can only lend bandwidth to one bandwidth borrowing logical port.

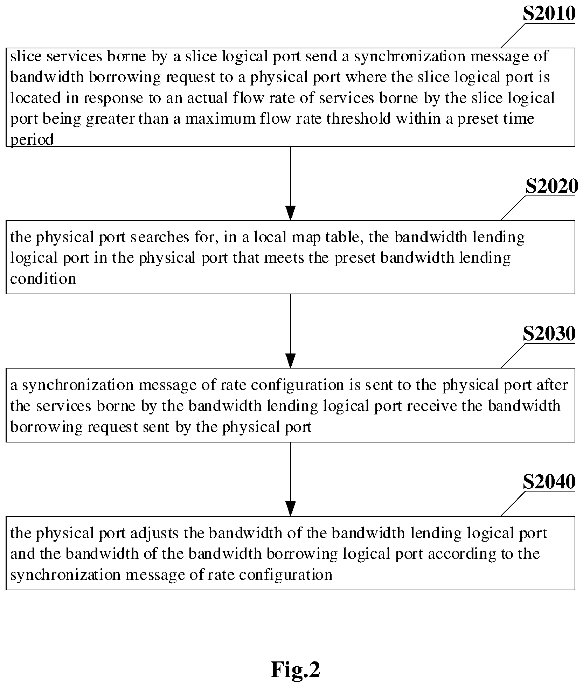

Referring to Fig. 2, Fig. 2 is a schematic flowchart of bandwidth lending according to this embodiment, including steps of S2010, S2020, S2030 and S2040.

At S2010, slice services borne by a slice logical port send a synchronization message of bandwidth borrowing request to a physical port where the slice logical port is located if an actual flow rate of services borne by the slice logical port is greater than a maximum flow rate threshold within a preset time period.

The synchronization message of bandwidth borrowing request carries the corresponding slice service identifiers (such as system identifiers (SID), etc.), the quantity of borrowed bandwidth, the duration of borrowed bandwidth and other information. The corresponding slice logical port (bandwidth borrowing logical port) may be determined through the slice service identifier.

For the physical port, the entity that processes information relevant to the physical port is a processing chip that is communicatively connected to the physical port. For the actual services borne by the slice logical port, each of the services is executed by the corresponding processing program, and the entity corresponding to the service is also a processing chip. In this embodiment, the processing chip corresponding to the physical port may be the same physical entity as the processing chip for processing services. In this case, sending by the slice service a synchronization message of bandwidth borrowing request to the physical port where the slice logical port is located is equivalent to sending by the processing program of the slice service a synchronization message of bandwidth borrowing request to the control program of the physical port. As far as the physical entity is concerned, it is an information interaction inside the processing chip.

That is to say, if the processing chip corresponding to the physical port is the same physical entity as the processing chip for processing services, the information interaction between the services and the physical port is essentially the information interaction inside the processing chip.

In an embodiment, the processing chip corresponding to the physical port may not be the same physical entity as the processing chip for processing services. In this case, sending by the slice service a synchronization message of bandwidth borrowing request to the physical port where the slice logical port is located is equivalent to sending by the processing chip of the slice service a synchronization message of bandwidth borrowing request to the processing chip of the physical port.

That is to say, if the processing chip corresponding to the physical port is not the same physical entity as the processing chip for processing services, the information interaction between the services and the physical port is essentially the information interaction between the processing chips.

At S2020, the physical port searches for, in a local map table, a bandwidth lending logical port in the physical port that meets the preset bandwidth lending condition.

In this embodiment, the physical port synchronizes information with the services borne by a plurality of slice logical ports in the map table, so as to search out a slice logical port with the flow rate of services less than the corresponding minimum flow rate threshold, and the search is terminated after a slice logical port with the flow rate of services less than the corresponding minimum flow rate threshold is searched out.

In this embodiment, if there is no bandwidth lending logical port that can lend bandwidth, the answer to the synchronization message is "no slice service that can be lent", and the process ends. If there is a bandwidth lending logical port that can lend bandwidth, a synchronization message of bandwidth lending request is sent to the services borne by the bandwidth lending logical port, and the content of the request includes SID of the services borne by the bandwidth lending logical port, borrowing time, the quantity of borrowed bandwidth, the duration of borrowing and the like.

The processing chip corresponding to the physical port may be the same physical entity as the processing chip for processing services. In this case, sending by the physical port a synchronization message of bandwidth lending request to the services borne by the bandwidth lending logical port is equivalent to sending by the control program of the physical port a synchronization message of bandwidth lending request to the processing program of the slice services. As far as the physical entity is concerned, it is an information interaction inside the chip.

At S2030, a synchronization message of rate configuration is sent to the physical port after the services borne by the bandwidth lending logical port receive the bandwidth borrowing request sent by the physical port.

In this embodiment, the synchronization message of rate configuration carries the identifiers (such as SID, etc.) of the services borne by the bandwidth lending logical port, the quantity of lent bandwidth, lending time and other information.

In this embodiment, if the bandwidth lent logical port has lent bandwidth, "bandwidth has been lent" is returned to the physical port, and the process ends. If "the quantity of lent bandwidth" of the bandwidth lending logical port is 0, "lending is not supported" is returned, and the process ends. For example, bandwidth lending may not be supported for specific services, such as security services.

At S2040, the physical port adjusts the bandwidth of the bandwidth lending logical port and the bandwidth of the bandwidth borrowing logical port according to the synchronization message of rate configuration.

In this embodiment, if the adjustment of the bandwidth of the bandwidth lending logical port and the bandwidth of the bandwidth borrowing logical port fails, "bandwidth adjustment of slice services failed" is returned. If the adjustment of the bandwidth of the bandwidth lending logical port and the bandwidth of the bandwidth borrowing logical port is successful, "adjustment is successful" is returned.

In this embodiment, after the slice services borne by the bandwidth lending logical port receive an adjustment result of the physical port, a corresponding error code is returned if the returned value is not success. If the returned result is success, the actual bandwidth, lending bandwidth, lending time and other information are updated and adjusted in a memory, and the response is "processing is successful".

After the physical port receives a result message of the slice services borne by the bandwidth lending logical port, a corresponding error code is returned if the returned value is not successful. If the returned value is successful, the actual bandwidth, lending bandwidth, cumulative lending times, cumulative lending duration, latest lending duration, latest lending time, latest lending party and other information of lending services are updated in the map table, and the response is a successful message.

In this embodiment, after the slice services borne by the bandwidth borrowing logical port receives the adjustment result of the physical port, a corresponding error code is returned if the returned value is not successful. If the returned value is successful, a synchronization message of rate configuration is sent to the physical device driver. The content of synchronization message includes information such as borrowing bandwidth, borrowing time, etc.

In this embodiment, if the adjustment of the bandwidth of the bandwidth lending logical port and the bandwidth of the bandwidth borrowing logical port is successful, the actual bandwidth, borrowed bandwidth, borrowing time, borrowing duration of the bandwidth borrowing logical port are updated and adjusted in the memory of the physical port, and a "timer for automatically returning borrowed bandwidth" is enabled, so that the borrowed bandwidth can be automatically returned when the borrowing time expires. If the adjustment fails, a "borrowed bandwidth returning process" is initiated.

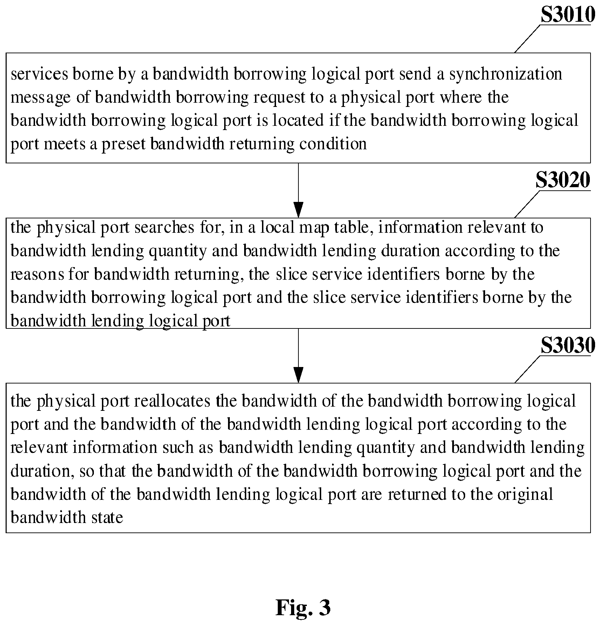

As shown in Fig. 3, Fig. 3 is a schematic flowchart of bandwidth returning according to this embodiment, including steps of S3010, S3020 and S3030.

At S3010, services borne by a bandwidth borrowing logical port send a synchronization message of bandwidth borrowing request to a physical port where the bandwidth borrowing logical port is located if the bandwidth borrowing logical port meets a preset bandwidth returning condition.

The synchronization message of bandwidth borrowing request carries information such as reasons for bandwidth returning, slice service identifiers borne by bandwidth borrowing logical port, slice service identifiers borne by bandwidth lending logical port, the quantity of borrowed bandwidth, the time of borrowing bandwidth, etc.

In this embodiment, the reasons for bandwidth returning vary according to the bandwidth returning conditions actually met. In this embodiment, the preset bandwidth returning conditions include: the actual flow rate of the bandwidth borrowing logical port is less than the current minimum flow rate threshold corresponding to the bandwidth borrowing logical port; the actual flow rate of services borne by the bandwidth lending logical port is greater than the current maximum flow rate threshold corresponding to the bandwidth lending logical port; the time limit of bandwidth lending has been reached; an abnormal adjustment of bandwidth by the physical port is detected.

At S3020, the physical port searches for, in a local map table, information relevant to bandwidth lending quantity and bandwidth lending duration according to the reasons for bandwidth returning, the slice service identifiers borne by the bandwidth borrowing logical port and the slice service identifiers borne by the bandwidth lending logical port.

In this embodiment, if the information relevant to bandwidth lending quantity and bandwidth lending duration is not searched out, alarm information is reported and the process ends. In this embodiment, the bandwidths of the plurality of slice logical ports may be reset after the alarm information is reported.

In an embodiment, if the returning reason is that "the time limit of bandwidth lending has been reached", the actual flow rate of services borne by the corresponding bandwidth lending logical port is queried. If the actual flow rate of services borne by the bandwidth lending logical port is less than the minimum flow rate threshold, the lending time of the bandwidth lending logical port is updated to the current time, the accumulated lending times, accumulated lending duration, latest lending duration, latest lending time and other information in the physical port are updated, and then the process ends. If the actual flow rate of services borne by the bandwidth lending logical port is greater than or equal to the minimum flow rate threshold, the physical port performs bandwidth returning operation.

At S3030, the physical port reallocates the bandwidth of the bandwidth borrowing logical port and the bandwidth of the bandwidth lending logical port according to the relevant information such as bandwidth lending quantity and bandwidth lending duration, so that the bandwidth of the bandwidth borrowing logical port and the bandwidth of the bandwidth lending logical port are returned to the original bandwidth state.

In the bandwidth lending process and bandwidth returning process according to this embodiment, based on the use of hardware resources of the physical port, adaptive service bandwidth adjustment not only makes full use of network resources, but also ensures the fluency of multiple services, and ultimately improves customer satisfaction.

### Embodiment three:

In this embodiment, based on embodiment one, the scheme of the present disclosure is exemplified through an example.

It is assumed that the same physical port has two slice logical ports with a bandwidth of 10 Gbps, bearing service A and service B respectively. The corresponding configuration adjustment parameters of the two slice logical ports are shown in Table 1.

**Table 1**

| Service | Maximum flow rate threshold | Minimum flow rate threshold | Bandwidth lending quantity | preset time period |
|---|---|---|---|---|
| Service A | 8 Gbps | 3 Gbps | 10% | 2 minutes |
| Service B | 8 Gbps | 3 Gbps | 10% | 2 minutes |

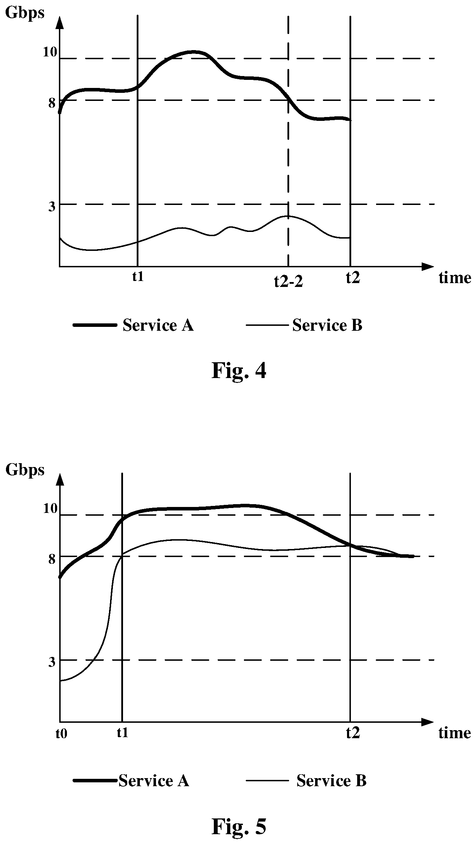

As shown in Fig. 4, when service A runs at a rate higher than 8 Gbps for 2 minutes and service B runs at a rate lower than 3 Gbps for 2 minutes, the bandwidth configured for the slice logical port of service B is automatically reduced by 10%, and the configured rate of service A is increased by 10%. When service B runs at a rate higher than 8 Gbps for 2 minutes and service A runs at a rate lower than 3 Gbps for 2 minutes, the bandwidth configured for the slice logical port of service A is automatically reduced by 10%, and the configured rate of service B is increased by 10%.

In an embodiment, at the time point t1, it is detected that the flow rate of service A has reached the maximum flow rate threshold for 2 minutes, while the flow rate of service B has been less than the minimum flow rate threshold for 2 minutes, then the system automatically increases the bandwidth of service A by 10% (1 Gbps) and decreases the bandwidth of service B by 10% (1 Gbps).

At the time point t2, the system detects that the flow rate of service A has been less than the maximum flow rate threshold for 2 minutes, then the system automatically reduces the bandwidth of service A by 1 Gbps and increases the bandwidth of service B by 1 Gbps to return to the original network state.

As shown in Fig. 5, it is assumed that bandwidth adjustment has been made for service A and service B, that is, the bandwidth of service A has been increased by 10% (1 Gbps) and the bandwidth of service B has been reduced by 10% (1 Gbps) before t0. When service B runs at a rate higher than the maximum flow rate threshold for 2 minutes, the bandwidth of service A is automatically reduced and the bandwidth of service B is automatically increased, so that the bandwidths of slice logical ports of service A and service B are returned to 10 Gbps.

In an embodiment, it is assumed that the bandwidth of service A has been increased by 10% (1 Gbps), and the bandwidth of service B has been reduced by 10% (1 Gbps) before t0. At the time point t1, the flow rate of service B starts to reach the maximum flow rate threshold of 8 Gbps. At the time point t2, the system detects that the flow rate of service B has been higher than the maximum flow rate threshold for 2 minutes, and then automatically increases the bandwidth of service B by 1 Gbps and decreases the bandwidth of service A by 1 Gbps.

### Embodiment four:

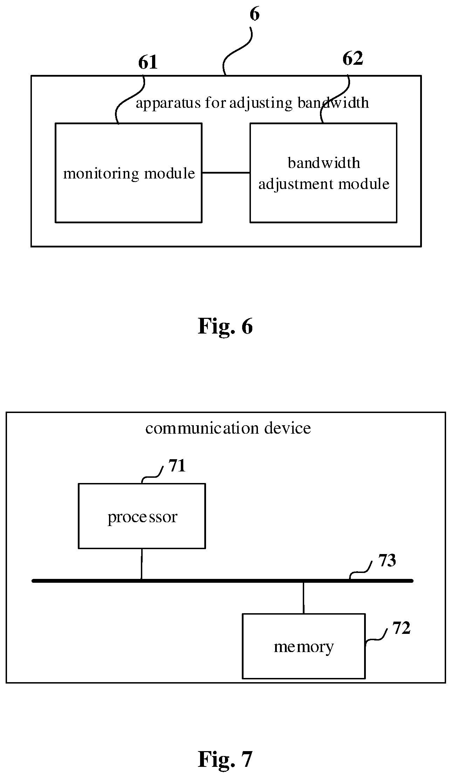

Referring to Fig. 6, Fig. 6 shows an apparatus 6 for adjusting bandwidth according to embodiment four of the present disclosure, including a monitoring module 61 and a bandwidth adjustment module 62. In this embodiment, the monitoring module 61 is configured to monitor whether a plurality of slice logical ports meet a preset bandwidth borrowing condition, and use a slice logical port that meets the preset bandwidth borrowing condition as a bandwidth borrowing logical port. The monitoring module 61 is further configured to search for, in a physical port to which the bandwidth borrowing logical port belongs, a slice logical port that meets a preset bandwidth lending condition to act as a bandwidth lending logical port. The bandwidth adjustment module 62 is configured to extract bandwidth from a bandwidth of the bandwidth lending logical port according to a preset bandwidth lending rule and allocate the extracted bandwidth to the bandwidth borrowing logical port.

In this embodiment, the preset bandwidth borrowing condition includes that an actual flow rate of services borne by the slice logical port is greater than a maximum flow rate threshold corresponding to the slice logical port.

In this embodiment, the flow rate of services may refer to the data transfer rate of the services borne by the slice logical port. In practical application, the data transfer rate is positively correlated with bandwidth, that is, the greater the data transfer rate, the greater the bandwidth occupied by the data transfer rate.

In this embodiment, in order to ensure that the slice logical port really needs to expand bandwidth, not just that the flow rate of services at a certain instant is greater than the maximum flow rate threshold, the preset bandwidth borrowing condition may be set as follows: the actual flow rate of services borne by the slice logical port is greater than the maximum flow rate threshold corresponding to the slice logical port within a preset time period.

In this embodiment, the maximum flow rate thresholds corresponding to the plurality of slice logical ports may be the same, that is, engineers may set a value as the maximum flow rate threshold corresponding to each of the plurality of slice logical ports. In this embodiment, the maximum flow rate thresholds corresponding to the plurality of slice logical ports may also be different, that is, the maximum flow rate thresholds corresponding to different slice logical ports may also be different. In this embodiment, engineers may set the maximum flow rate thresholds corresponding to the plurality of slice logical ports according to the actual situations of the services borne by the plurality of slice logical ports. In an embodiment, a slice logical port bears only one service.

In this embodiment, a slice logical port table may be set in the apparatus for adjusting bandwidth to determine which slice logical ports correspond to the physical port to which the bandwidth borrowing logical ports belong.

In this embodiment, the preset bandwidth lending condition includes that: the actual flow rate of services borne by the slice logical port is less than the minimum flow rate threshold corresponding to the slice logical port.

In this embodiment, in order to ensure that the slice logical port can lend bandwidth, not just that the flow rate of services at a certain instant is less than the minimum flow rate threshold, the preset bandwidth lending condition may be set as follows: the actual flow rate of services borne by the slice logical port is less than the minimum flow rate threshold corresponding to the slice logical port within a preset time period.

Similar to the maximum flow rate thresholds corresponding to the plurality of slice logical ports, the minimum flow rate thresholds corresponding to the plurality of slice logical ports in this embodiment may be the same, that is, engineers may set a value as the minimum flow rate threshold corresponding to each of the plurality of slice logical ports. In this embodiment, the minimum flow rate thresholds corresponding to the plurality of slice logical ports may also be different, that is, the minimum flow rate thresholds corresponding to different slice logical ports may also be different. In this embodiment, engineers may set the minimum flow rate thresholds corresponding to the plurality of slice logical ports according to the actual situations of the services borne by the plurality of slice logical ports.

In practical applications, there may be some special services, such as security services, VIP services, etc. These services have high priority and may need to ensure that their bandwidth is sufficient. Therefore, in this embodiment, different levels may be set for different slice logical ports according to the services borne by different slice logical ports. For a slice logical port with a level greater than the preset level threshold, it may be set that: the slice logical port cannot be used as a bandwidth lending logical port.

In this embodiment, the quantity of the bandwidth lent by the bandwidth lending logical port to the bandwidth borrowing logical port (i.e., the bandwidth extracted from the bandwidth of the bandwidth lending logical port) may be predetermined. In an embodiment, the bandwidth adjustment module 62 may extract a preset bandwidth lending proportion of bandwidth or a preset bandwidth lending quantity of bandwidth from the bandwidth of the bandwidth lending logical port according to a preset bandwidth lending proportion or a preset bandwidth lending quantity, and allocate the extracted bandwidth to the bandwidth borrowing logical port.

In this embodiment, the quantity of bandwidth lent by the bandwidth lending logical port to the bandwidth borrowing logical port may also be determined according to the actual data transfer of the services borne by the bandwidth lending logical port. In an embodiment, the bandwidth adjustment module 62 may calculate a difference between the actual flow rate of services borne by the bandwidth lending logical port within a preset time period and the minimum flow rate threshold corresponding to the bandwidth lending logical port, calculate a bandwidth corresponding to the difference, and extract the bandwidth corresponding to the difference from the bandwidth of the bandwidth lending logical port and allocate the extracted bandwidth to the bandwidth borrowing logical port.

The calculation of the difference between the actual flow rate of services borne by the bandwidth lending logical port within a preset time period and the minimum flow rate threshold corresponding to the bandwidth lending logical port may be the calculation of a difference between an average value of the actual flow rate of services borne by the bandwidth lending logical port within the preset time period and the minimum flow rate threshold corresponding to the bandwidth lending logical port or the calculation of a difference between a peak value (maximum or minimum value) of the actual flow rate of services borne by the bandwidth lending logical port within the preset time period and the minimum flow rate threshold corresponding to the bandwidth lending logical port.

Since there is a unique correspondence between flow rate and bandwidth, the maximum bandwidth threshold or the minimum bandwidth threshold may be used instead of the maximum flow rate threshold and the minimum flow rate threshold, which are essentially equivalent.

In addition, the essence of monitoring the actual flow rate of services borne by the slice logical port is to obtain the occupied bandwidth of services borne by the slice logical port, so directly monitoring the occupied bandwidth of services borne by the slice logical port and monitoring the actual flow rate of services borne by the slice logical port are also essentially equivalent.

In this embodiment, in the process of determining the bandwidth borrowing logical port, the monitoring module 61 may also determine the bandwidth borrowing quantity of the bandwidth borrowing logical port at the same time. Then, in the process of extracting by the bandwidth adjustment module 62, a bandwidth from the bandwidth of the bandwidth lending logical port according to the preset bandwidth lending rule and allocating the extracted bandwidth to the bandwidth borrowing logical port, the monitoring module 61 detects whether the total bandwidth extracted from the bandwidth lending logical port matches with the bandwidth borrowing quantity, and detects whether bandwidth has been extracted from bandwidths of all the bandwidth lending logical ports according to the preset bandwidth lending rule and allocated to the bandwidth borrowing logical port. If it is detected that the total bandwidth extracted from the bandwidth lending logical port matches with the bandwidth borrowing quantity, or bandwidth has been extracted from bandwidths of all the bandwidth lending logical ports according to the preset bandwidth lending rule, it indicates that the bandwidth has been lent out, the lending process needs to be terminated, and the bandwidth adjustment module 62 may no longer extract bandwidth from the bandwidth lending logical port according to the preset bandwidth lending rule and allocate the extracted bandwidth to the bandwidth lending logical port. Whether the extracted total bandwidth matches with the bandwidth borrowing quantity may be determined by setting a matching condition. In this embodiment, the matching conditions may be set as follows: the extracted total bandwidth is greater than or equal to the bandwidth borrowing quantity, that is, matching. Alternatively, the matching condition may be set as follows: the extracted total bandwidth is greater than or equal to a difference between the bandwidth borrowing quantity and the tolerable quantity.

In this embodiment, the bandwidth borrowing quantity may also be preset. That is, for the bandwidth borrowing logical port, the bandwidth borrowing quantity is preset. In this embodiment, the bandwidth borrowing quantity may also not be set, and the quantity of bandwidth that can be borrowed by the bandwidth borrowing logical port is determined by the bandwidth that can be lent by the bandwidth lending logical port.

In the actual service operation and management process, due to the huge services, the requirements for device management will be very high and the management process will be complicated if bandwidth is borrowed from a plurality of slice logical ports. Therefore, in an embodiment, it may be set as follows: if the monitoring module 61 searches out two or more slice logical ports that meet the preset bandwidth lending condition, one of the two or more slice logical ports that meet the preset bandwidth lending condition is selected as the bandwidth lending logical port; alternatively, if the monitoring module 61 searches out a slice logical port that meets the preset bandwidth lending condition, the slice logical port may be used as the bandwidth lending logical port, and then the search may be terminated. In this way, it is ensured that only one bandwidth lending logical port is used for lending bandwidth in one process of bandwidth borrowing and lending, which is convenient for device management.

In this embodiment, also, due to the huge services in the actual service operation and management process, the requirements for device management will be very high and the management process will be complicated if bandwidth is lent from a slice logical port for many times. Therefore, in an embodiment, it may be set as follows: if a slice logical port has lent bandwidth, the slice logical port may no longer be used as a bandwidth lending logical port. In this case, in the process of searching for, in a physical port to which the bandwidth borrowing logical port belongs, a slice logical port that meets the preset bandwidth lending condition to act as a bandwidth lending logical port, the monitoring module 61 may search for, in the physical port to which the bandwidth borrowing logical port belongs, slice logical ports with the actual flow rate of services borne by the slice logical port less than the minimum flow rate threshold corresponding to the slice logical port, determine a slice logical port without lending bandwidth in the searched slice logical ports, and use the slice logical port without lending bandwidth as the bandwidth lending logical port.

Alternatively, the monitoring module 61 may search for, in the physical port to which the bandwidth borrowing logical port belongs, slice logical ports without lending bandwidth, and search for, among the slice logical ports without lending bandwidth, a slice logical port with the actual flow rate of services borne by the slice logical port less than the minimum flow rate threshold corresponding to the slice logical port to act as the bandwidth lending logical port.

In order to ensure that the apparatus for adjusting bandwidth can distinguish which slice logical ports have lent bandwidth, a flag may be set for the slice logical port in the process of lending bandwidth by the slice logical port, to determine that the slice logical port has lent bandwidth. In this embodiment, the flag may be cleared after all the bandwidth lent by the slice logical port is returned.

In this embodiment, the minimum flow rate threshold is n% of the flow rate corresponding to the current bandwidth of the slice logical port, and n is greater than 0 and less than 100; the maximum flow rate threshold is m% of the flow rate corresponding to the current bandwidth of the slice logical port, and m is greater than 0 and less than 100. That is, in this embodiment, the minimum flow rate threshold and/or the maximum flow rate threshold corresponding to the slice logical port may be dynamically updated with the borrowing or lending of the slice logical port bandwidth.

In order to ensure that the remaining bandwidth of the bandwidth lending logical port after lending bandwidth can still fully meet the needs of services borne by the bandwidth lending logical port, in an embodiment, the bandwidth lending logical port may be detected after lending bandwidth to determine whether the remaining bandwidth is sufficient.

In an embodiment, the minimum flow rate threshold corresponding to the bandwidth lending logical port may be updated with the actual bandwidth of the bandwidth lending logical port after lending bandwidth. In an embodiment, the minimum flow rate threshold may be set to be n% of the flow rate corresponding to the current actual bandwidth of the slice logical port.

In this way, after the bandwidth lending logical port lends bandwidth, the actual bandwidth of the bandwidth lending logical port will decrease, and the corresponding minimum flow rate threshold will also decrease. At this time, the monitoring module 61 may detect whether the current actual flow rate of services borne by the bandwidth lending logical port is greater than the current minimum flow rate threshold corresponding to the bandwidth lending logical port. If the current actual flow rate of services borne by the bandwidth lending logical port is greater than the current minimum flow rate threshold corresponding to the bandwidth lending logical port, it indicates that the remaining bandwidth of the bandwidth lending logical port after lending bandwidth cannot fully meet the needs of services borne by the bandwidth lending logical port, so it is determined that this bandwidth lending of the bandwidth lending logical port is invalid, and the bandwidth lent by the bandwidth lending logical port is reclaimed. If the current actual flow rate of services borne by the bandwidth lending logical port is less than or equal to the current minimum flow rate threshold corresponding to the bandwidth lending logical port, it indicates that the remaining bandwidth after lending can still fully meet the needs of services borne by the bandwidth lending logical port, and this lending is effective.

After the bandwidth adjustment module 62 extracts bandwidth from the bandwidth lending logical port according to the preset bandwidth lending rule and allocates the extracted bandwidth to the bandwidth borrowing logical port, the monitoring module 61 may also monitor whether the preset bandwidth returning condition is triggered. The bandwidth adjustment module 62 may return the bandwidth allocated to the bandwidth borrowing logical port to the bandwidth lending logical port if the preset bandwidth returning condition is triggered.

In this embodiment, the preset bandwidth returning condition includes at least one of the following conditions.

Condition one: the actual flow rate of the bandwidth borrowing logical port is less than the current minimum flow rate threshold corresponding to the bandwidth borrowing logical port.

Condition two: the actual flow rate of services borne by the bandwidth lending logical port is greater than the current maximum flow rate threshold corresponding to the bandwidth lending logical port.

Condition three: a time limit of bandwidth lending has been reached.

Condition four: an abnormal adjustment of bandwidth by the physical port is detected.

In this embodiment, if condition one is triggered, it indicates that the current remaining bandwidth of the bandwidth borrowing logical port is sufficient, and it may not need to borrow bandwidth at all. Therefore, the bandwidth adjustment module 62 may return the bandwidth borrowed by the bandwidth borrowing logical port to the bandwidth lending logical ports that lend bandwidth to the bandwidth borrowing logical port, respectively.

In this embodiment, if condition two is triggered, it indicates that there is a risk that the current remaining bandwidth of the bandwidth lending logical port cannot meet the requirements for services borne by the bandwidth lending logical port, so the bandwidth adjustment module 62 may return the bandwidth lent by the bandwidth lending logical port from the bandwidth borrowing logical port to which the bandwidth lending logical port lends the bandwidth.

In this embodiment, if condition three is triggered, there may be a situation that the bandwidth lending logical port does not actually need to be returned bandwidth. Therefore, a detection may be performed. Before the bandwidth adjustment module 62 returns the bandwidth allocated to the bandwidth borrowing logical port to the bandwidth lending logical port, the monitoring module 61 may detect whether the actual flow rate of services borne by the bandwidth lending logical port is greater than or equal to the current minimum flow rate threshold corresponding to the bandwidth lending logical port. If it is detected that the actual flow rate of services borne by the bandwidth lending logical port is greater than or equal to the current minimum flow rate threshold corresponding to the bandwidth lending logical port, the bandwidth adjustment module 62 returns the bandwidth allocated to the bandwidth borrowing logical port to the bandwidth lending logical port. If it is detected that the actual flow rate of services borne by the bandwidth lending logical port is less than the current minimum flow rate threshold corresponding to the bandwidth lending logical port, it indicates that the bandwidth lending logical port may not actually need to be returned bandwidth, and bandwidth may be continued to be lent without being returned.

In this embodiment, the apparatus for adjusting bandwidth may record the corresponding borrowing and lending relationships. In an embodiment, the apparatus for adjusting bandwidth may record information such as lending time and lending time limit, etc. If it is detected that the bandwidth lending logical port may not need to be returned the lent bandwidth and bandwidth may be continued to be lent, the communication device may update information such as the corresponding lending time, lending time limit, etc.

In this embodiment, the bandwidth lending, bandwidth borrowing, and bandwidth extraction and allocation to the bandwidth borrowing logical port are essentially the reallocation of the bandwidth between the bandwidth lending logical port and the bandwidth borrowing logical port by the apparatus for adjusting bandwidth.

In this embodiment, if condition four is triggered, it indicates that there is an error in the execution process of the apparatus for adjusting bandwidth. In this case, the bandwidths of all the bandwidth borrowing logical ports may be returned to the bandwidth lending logical ports. This operation is essentially a bandwidth reset operation.

According to the apparatus for adjusting bandwidth provided by the embodiments of the disclosure, bandwidths of a plurality of slice logical ports corresponding to the same physical port can be dynamically allocated by monitoring whether a plurality of slice logical ports meet a preset bandwidth borrowing condition, using a slice logical port as a bandwidth borrowing logical port if it is monitored that the slice logical port meet the preset bandwidth borrowing condition, searching for a slice logical port that meets a preset bandwidth lending condition in a physical port to which the bandwidth borrowing logical port belongs, to act as a bandwidth lending logical port, and then extracting a bandwidth from the bandwidth lending logical port according to a preset bandwidth lending rule and allocating the bandwidth to the bandwidth borrowing logical port. If a slice logical port meets the preset bandwidth borrowing condition, it indicates that the bandwidth of the slice logical port cannot meet the actual requirements of services borne by the slice logical port, and it may need to borrow bandwidth from other slice logical ports to expand the bandwidth. If a slice logical port meets the preset bandwidth lending condition, it indicates that the bandwidth of the slice logical port exceeds the actual requirements of services borne by the slice logical port, and there is a waste of resources, so a certain bandwidth may be lent to the slice logical port that meets the preset bandwidth borrowing condition. If it is monitored that there is a bandwidth borrowing logical port that needs to expand bandwidth, a bandwidth lending logical port which can lend bandwidth is searched for in the physical port to which the bandwidth borrowing logical port belongs, and bandwidth is extracted from the bandwidth lending logical port and allocated to the bandwidth borrowing logical port, so that the bandwidth of the bandwidth borrowing logical port can be expanded, which avoids congestion of services borne by the bandwidth borrowing logical port and improves user experience, at the same time, the bandwidth of the bandwidth lending logical port can be utilized more reasonably, and the hardware resources of the port can be fully utilized, which reduces the waste of resources.

### Embodiment five:

This embodiment provides a communication device, as shown in Fig.7, which includes a processor 71, a memory 72, and a communication bus 73. In this embodiment, the communication bus 73 is configured to implement communication between the processor 71 and the memory 72. The processor 71 is configured to execute one or more programs stored in the memory 72 to implement the method for adjusting bandwidth described in any one of Embodiments one to three above.

The communication device in this embodiment may be a network control device, such as a server or a controller, or may be a terminal device, such as a host.

The communication device in this embodiment may have a physical port, that is, the physical port may be a physical port in the communication device. Alternatively, the communication device in this embodiment may not have a physical port, and the physical port corresponding to the slice logical port controlled by the communication device is a physical port connected to the communication device network, such as a router.

This embodiment further provides a computer-readable storage medium, such as a floppy disk, an optical disk, a hard disk, a flash memory, a universal serial bus (USB) disk, a compact flash memory (CF) card, a secure digital memory (SDM) card, a multimedia card (MMC). The computer-readable storage medium is stored with a computer-executable instruction which, when executed by one or more processors, implements the method for adjusting bandwidth described in any one of Embodiments one to three. Details are not described herein.

The above modules or steps of the present disclosure may be implemented by a general-purpose computing device, which may be centralized on a single computing device or distributed over a network composed of a plurality of computing devices. In an embodiment, The above modules or steps may be implemented with program codes executable by a computing device, so that they may be stored in a computer-readable storage medium (read only memory (ROM)/random access memory (RAM), magnetic disk, optical disk) to be executed by the computing device. In some cases, the steps shown or described may be performed in a sequence different from that herein, or they may be separately made into a plurality of integrated circuit modules, or a plurality of modules or steps thereof may be made into a single integrated circuit module. Therefore, the present disclosure is not limited to any particular combination of hardware and software.

## Claims

1. A method for adjusting bandwidth, comprising:
using a slice logical port as a bandwidth borrowing logical port in response to monitoring that the slice logical port meets a preset bandwidth borrowing condition (S1010);
searching for, in a physical port to which the bandwidth borrowing logical port belongs, a slice logical port that meets a preset bandwidth lending condition to act as a bandwidth lending logical port (S 1020); and
extracting bandwidth from a bandwidth of the bandwidth lending logical port according to a preset bandwidth lending rule and allocating the extracted bandwidth to the bandwidth borrowing logical port (S1030);
**characterized in that**,
the preset bandwidth borrowing condition comprises that: an actual flow rate of services borne by the slice logical port is greater than a maximum flow rate threshold corresponding to the slice logical port;
the preset bandwidth lending condition comprises that: the actual flow rate of services borne by the slice logical port is less than a minimum flow rate threshold corresponding to the slice logical port.

2. The method of claim 1, wherein the extracting bandwidth from a bandwidth of the bandwidth lending logical port according to a preset bandwidth lending rule and allocating the extracted bandwidth to the bandwidth borrowing logical port (S1030) comprises:
extracting from the bandwidth of the bandwidth lending logical port, according to a preset bandwidth lending proportion or a preset bandwidth lending quantity, the preset bandwidth lending proportion of bandwidth or the preset bandwidth lending quantity of bandwidth, and allocating the extracted bandwidth to the bandwidth borrowing logical port; or
calculating a difference between an actual flow rate of services borne by the bandwidth lending logical port within a preset time period and a minimum flow rate threshold corresponding to the bandwidth lending logical port; calculating a bandwidth corresponding to the difference; and extracting the bandwidth corresponding to the difference from the bandwidth of the bandwidth lending logical port and allocating the extracted bandwidth to the bandwidth borrowing logical port.

3. The method of any of claims 1 to 2, further comprising:
after the using a slice logical port as a bandwidth borrowing logical port in response to monitoring that the slice logical port meets a preset bandwidth borrowing condition (S1010),
determining a bandwidth borrowing quantity of the bandwidth borrowing logical port; and
stopping the extracting bandwidth from a bandwidth of the bandwidth lending logical port according to a preset bandwidth lending rule and allocating the extracted bandwidth to the bandwidth borrowing logical port in response to detecting that a total bandwidth extracted from the bandwidth lending logical port matches with the bandwidth borrowing quantity or detecting that bandwidth have been extracted from bandwidths of all bandwidth lending logical ports according to the preset bandwidth lending rule.

4. The method of any of claims 1 to 3, wherein the searching for a slice logical port that meets a preset bandwidth lending condition to act as a bandwidth lending logical port (S1020) comprises:
selecting one of at least two slice logical ports as the bandwidth lending logical port in response to searching out the at least two slice logical ports that meet the preset bandwidth lending condition; or
using one slice logical port as the bandwidth lending logical port in response to searching out the one slice logical port that meets the preset bandwidth lending condition, and stopping searching for the slice logical port that meets the preset bandwidth lending condition.

5. The method of any of claims 1 to 3, wherein the searching for, in a physical port to which the bandwidth borrowing logical port belongs, a slice logical port that meets a preset bandwidth lending condition to act as a bandwidth lending logical port (S1020) comprises:
searching for, in the physical port to which the bandwidth borrowing logical port belongs, slice logical ports with an actual flow rate of services borne by the slice logical port less than a minimum flow rate threshold corresponding to the slice logical port; determining, among the searched slice logical ports, a slice logical port without lending bandwidth; and using the slice logical port without lending bandwidth as the bandwidth lending logical port; or
searching for, in the physical port to which the bandwidth borrowing logical port belongs, slice logical ports without lending bandwidth; and searching for, among the slice logical ports without lending bandwidth, a slice logical port with an actual flow rate of services borne by the slice logical port less than a minimum flow rate threshold corresponding to the slice logical port to act as the bandwidth lending logical port.

6. The method of any of claims 1 to 5, wherein the minimum flow rate threshold corresponding to the slice logical port is n% of a flow rate corresponding to a current actual bandwidth of the slice logical port, and n is greater than 0 and less than 100; and the method further comprises:
after the extracting bandwidth from a bandwidth of the bandwidth lending logical port according to a preset bandwidth lending rule and allocating the extracted bandwidth to the bandwidth borrowing logical port (S 1030),
detecting whether a current actual flow rate of services borne by the bandwidth lending logical port is greater than a current minimum flow rate threshold corresponding to the bandwidth lending logical port; and
determining that bandwidth lending of the bandwidth lending logical port is invalid in response to judging that the current actual flow rate of services borne by the bandwidth lending logical port is greater than the current minimum flow rate threshold corresponding to the bandwidth lending logical port, and reclaiming the bandwidth lent by the bandwidth lending logical port.

7. The method of any of claims 1 to 6, further comprising:
after the extracting bandwidth from a bandwidth of the bandwidth lending logical port according to a preset bandwidth lending rule and allocating the extracted bandwidth to the bandwidth borrowing logical port (S 1030),
returning the bandwidth allocated to the bandwidth borrowing logical port to the bandwidth lending logical port in response to triggering a preset bandwidth returning condition.

8. The method of claim 7, wherein the preset bandwidth returning condition comprises at least one of:
condition one: the actual flow rate of the bandwidth borrowing logical port is less than the minimum flow rate threshold corresponding to the bandwidth borrowing logical port;
condition two: the actual flow rate of services borne by the bandwidth lending logical port is greater than a current maximum flow rate threshold corresponding to the bandwidth lending logical port;
condition three: a time limit of bandwidth lending has been reached; and
condition four: an abnormal adjustment of bandwidth by the physical port is detected.

9. The method of claim 8, wherein, in response to that the preset bandwidth returning condition comprises the condition three and the condition three is triggered, the method further comprises:
before the returning the bandwidth allocated to the bandwidth borrowing logical port to the bandwidth lending logical port,
determining that the actual flow rate of services borne by the bandwidth lending logical port is greater than or equal to the current minimum flow rate threshold corresponding to the bandwidth lending logical port.

10. A communication device, comprising: a processor (71), a memory (72), and a communication bus (73); wherein,
the communication bus (73) is configured for communication between the processor (71) and the memory (72); and
the processor (71) is configured to execute at least one program stored in the memory (72) to implement the method for adjusting bandwidth of any of claims 1 to 9.

11. A computer readable storage medium storing a computer executable instruction, which is used to carry out the method for adjusting bandwidth of any of claims 1 to 9 when run on a computer.

## Patentansprüche

1. Verfahren zum Anpassen einer Bandbreite, umfassend:
Verwenden eines logischen Teilports als einen logischen Bandbreitenausleihport als Reaktion auf ein Überwachen, dass der logische Teilport eine voreingestellte Bandbreitenausleihbedingung erfüllt (S1010);
Suchen in einem physischen Port, zu dem der logische Bandbreitenausleihport gehört, nach einem logischen Teilport, der eine voreingestellte Bandbreitenverleihbedingung erfüllt, um als ein logischer Bandbreitenverleihport zu funktionieren (S1020); und
Extrahieren einer Bandbreite aus einer Bandbreite des logischen Bandbreitenverleihports gemäß einer voreingestellten Bandbreitenverleihregel und Zuweisen der extrahierten Bandbreite zu dem logischen Bandbreitenausleihport (S1030);
**dadurch gekennzeichnet, dass**
die voreingestellte Bandbreitenausleihbedingung umfasst, dass: ein tatsächlicher Durchsatz von Diensten, der von dem logischen Teilport getragen wird, größer als ein maximaler Durchsatzschwellenwert ist, der dem logischen Teilport entspricht;
die voreingestellte Bandbreitenverleihbedingung umfasst, dass: der tatsächliche Durchsatz von Diensten, der von dem logischen Teilport getragen wird, geringer als ein minimaler Durchsatzschwellenwert ist, der dem logischen Teilport entspricht.

2. Verfahren nach Anspruch 1, wobei das Extrahieren einer Bandbreite aus einer Bandbreite des logischen Bandbreitenverleihports gemäß einer voreingestellten Bandbreitenverleihregel und das Zuweisen der extrahierten Bandbreite zu dem logischen Bandbreitenausleihport (S1030) umfassen:
Extrahieren aus der Bandbreite des logischen Bandbreitenverleihports gemäß einer voreingestellten Bandbreitenverleihproportion oder einer voreingestellten Bandbreitenverleihgröße der voreingestellten Bandbreitenverleihproportion der Bandbreite oder der voreingestellten Bandbreitenverleihgröße der Bandbreite und Zuweisen der extrahierten Bandbreite zu dem logischen Bandbreitenausleihport; oder
Berechnen einer Differenz zwischen einem tatsächlichen Durchsatz von Diensten, der von dem logischen Bandbreitenverleihport innerhalb eines voreingestellten Zeitraums getragen wird, und einem minimalen Durchsatzschwellenwert ist, der dem logischen Bandbreitenverleihport entspricht; Berechnen einer Bandbreite, die der Differenz entspricht; und Extrahieren der Bandbreite, die der Differenz entspricht, aus der Bandbreite des logischen Bandbreitenverleihports und Zuweisen der extrahierten Bandbreite zu dem logischen Bandbreitenausleihport.

3. Verfahren nach einem der Ansprüche 1 bis 2, das außerdem umfasst:
nach dem Verwenden eines logischen Teilports als einen logischen Bandbreitenausleihport als Reaktion auf ein Überwachen, dass der logische Teilport eine voreingestellte Bandbreitenausleihbedingung erfüllt (S1010) ,
Ermitteln einer Bandbreitenausleihgröße des logischen Bandbreitenausleihports; und
Stoppen des Extrahierens einer Bandbreite aus einer Bandbreite des logischen Bandbreitenverleihports gemäß einer voreingestellten Bandbreitenverleihregel und Zuweisen der extrahierten Bandbreite zu dem logischen Bandbreitenausleihport als Reaktion auf ein Erkennen, dass eine Gesamtbandbreite, die aus dem logischen Bandbreitenverleihport extrahiert wurde, mit der Bandbreitenausleihgröße übereinstimmt oder auf ein Erkennen, dass aus den Bandbreiten aller logischen Bandbreitenverleihports gemäß der voreingestellten Bandbreitenverleihregel eine Bandbreite extrahiert wurde.

4. Verfahren nach einem der Ansprüche 1 bis 3, wobei das Suchen nach einem logischen Teilport, der eine voreingestellte Bandbreitenverleihbedingung erfüllt, um als ein logischer Bandbreitenverleihport zu funktionieren (S1020), umfasst:
Auswählen eines von mindestens zwei logischen Teilports als den logischen Bandbreitenverleihport als Reaktion auf das Aussuchen der mindestens zwei logischen Teilports, welche die voreingestellte Bandbreitenverleihbedingung erfüllen; oder
Verwenden eines logischen Teilports als den logischen Bandbreitenverleihport als Reaktion auf ein Aussuchen des einen logischen Teilports, der die voreingestellte Bandbreitenverleihbedingung erfüllt, und Stoppen des Suchens nach dem logischen Teilport, der die voreingestellte Bandbreitenverleihbedingung erfüllt.

5. Verfahren nach einem der Ansprüche 1 bis 3, wobei das Suchen in einem physischen Port, zu dem der logische Bandbreitenausleihport gehört, nach einem logischen Teilport, der eine voreingestellte Bandbreitenverleihbedingung erfüllt, um als ein logischer Bandbreitenverleihport zu funktionieren (S1020), umfasst:
Suchen, in dem physischen Port, zu dem der logische Bandbreitenausleihport gehört, nach logischen Teilports mit einem tatsächlichen Durchsatz von Diensten, der von dem logischen Teilport getragen wird, der geringer als ein minimaler Durchsatzschwellenwert ist, der dem logischen Teilport entspricht; Ermitteln, aus den gesuchten logischen Teilports, eines logischen Teilports ohne eine verliehene Bandbreite; und Verwenden des logischen Teilports ohne eine verliehene Bandbreite als den logischen Bandbreitenverleihport; oder
Suchen in dem physischen Port, zu dem der logische Bandbreitenausleihport gehört, nach logischen Teilports ohne eine verliehene Bandbreite; und Suchen, in den logischen Teilports ohne eine verliehene Bandbreite, nach einem logischen Teilport mit einem tatsächlichen Durchsatz von Diensten, der von dem logischen Teilport getragen wird, der geringer als ein minimaler Durchsatzschwellenwert ist, der dem logischen Teilport entspricht, um als der logische Bandbreitenverleihport zu funktionieren.

6. Verfahren nach einem der Ansprüche 1 bis 5, wobei der minimale Durchsatzschwellenwert, der dem logischen Teilport entspricht, n% eines Durchsatzes beträgt, der einer aktuellen Bandbreite des logischen Teilports entspricht, und wobei n größer als 0 aber kleiner als 100 ist; und wobei das Verfahren außerdem umfasst:
nach dem Extrahieren einer Bandbreite aus einer Bandbreite des logischen Bandbreitenverleihports gemäß einer voreingestellten Bandbreitenverleihregel und dem Zuweisen der extrahierten Bandbreite zu dem logischen Bandbreitenausleihport (S1030),
Erkennen, ob ein tatsächlicher Durchsatz von Diensten, der von dem logischen Bandbreitenverleihport getragen wird, größer als ein aktueller minimaler Durchsatzschwellenwert ist, der dem logischen Bandbreitenverleihport entspricht; und
Ermitteln, dass das Bandbreitenverleihen der logischen Bandbreitenverleihports ungültig ist, als Reaktion auf ein Beurteilen, dass der aktuelle tatsächliche Durchsatz von Diensten, der von dem logischen Bandbreitenverleihport getragen wird, größer als der aktuelle minimale Durchsatzschwellenwert ist, der dem logischen Bandbreitenverleihport entspricht, und erneutes Beanspruchen des Bandbreitenverleihens durch den logischen Bandbreitenverleihport.

7. Verfahren nach einem der Ansprüche 1 bis 6, das außerdem umfasst:
nach dem Extrahieren einer Bandbreite aus einer Bandbreite des logischen Bandbreitenverleihports gemäß einer voreingestellten Bandbreitenverleihregel und dem Zuweisen der extrahierten Bandbreite zu dem logischen Bandbreitenausleihport (S1030),
Zurückgeben der Bandbreite, die dem logischen Bandbreitenausleihport zugewiesen wurde, zu dem logischen Bandbreitenverleihport als Reaktion auf das Auslösen einer voreingestellten Bandbreitenrückgabebedingung.

8. Verfahren nach Anspruch 7, wobei die voreingestellte Bandbreitenrückgabebedingung mindestens eine umfasst von:
Bedingung eins: der tatsächliche Durchsatz des logischen Bandbreitenausleihports ist geringer als ein minimaler Durchsatzschwellenwert, der dem logischen Bandbreitenausleihport entspricht;
Bedingung zwei: der tatsächliche Durchsatz von Diensten, der von dem logischen Bandbreitenverleihport getragen wird, ist größer als ein aktueller maximaler Durchsatzschwellenwert, der dem logischen Bandbreitenverleihport entspricht;
Bedingung drei: eine zeitliche Begrenzung des Bandbreitenverleihens ist erreicht worden; und
Bedingung vier: eine abnormale Anpassung der Bandbreite durch den physischen Port ist erkannt worden.

9. Verfahren nach Anspruch 8, wobei das Verfahren, als Reaktion darauf, dass die voreingestellte Bandbreitenrückgabebedingung die Bedingung drei umfasst und die Bedingung vier ausgelöst wurde, außerdem umfasst:
vor dem Zurückgeben der Bandbreite, die dem logischen Bandbreitenausleihport zugewiesen wurde, zu dem logischen Bandbreitenverleihport,
Ermitteln, dass der tatsächliche Durchsatz von Diensten, der von dem logischen Bandbreitenverleihport getragen wird, größer als ein, oder gleich einem aktuellen minimalen Durchsatzschwellenwert ist, der dem logischen Bandbreitenverleihport entspricht.

10. Kommunikationsvorrichtung, umfassend: einen Prozessor (71), einen Speicher (72) und einen Kommunikationsbus (73); wobei:
der Kommunikationsbus (73) konfiguriert ist für eine Kommunikation zwischen dem Prozessor (71) und dem Speicher (72); und
der Prozessor (71) konfiguriert ist zum Ausführen mindestens eines Programms, das in dem Speicher (72) gespeichert ist, um das Verfahren zum Anpassen einer Bandbreite nach einem der Ansprüche 1 bis 9 zu implementieren.

11. Computerlesbares Speichermedium, in dem ein in einem Computer ausführbaren Befehlssatz gespeichert ist, der, wenn er in einem Computer abläuft, verwendet wird, um das Verfahren zum Anpassen einer Bandbreite nach einem der Ansprüche 1 bis 9 auszuführen.

## Revendications

1. Procédé de réglage de bande passante, comprenant les étapes consistant à :
utiliser un port logique de tranche comme port logique d'emprunt de bande passante en réponse à la surveillance du fait que le port logique de tranche répond à une condition prédéfinie d'emprunt de bande passante (S1010) ;
rechercher, dans un port physique auquel appartient le port logique d'emprunt de bande passante, un port logique de tranche qui répond à une condition prédéfinie de prêt de bande passante pour agir en tant que port logique de prêt de bande passante (S1020) ; et
extraire une bande passante d'une bande passante du port logique de prêt de bande passante selon une règle prédéfinie de prêt de bande passante et allouer la bande passante extraite au port logique d'emprunt de bande passante (S1030) ;
**caractérisé en ce que** :
la condition prédéfinie d'emprunt de bande passante comprend : un débit réel de services pris en charge par le port logique de tranche est supérieur à un seuil de débit maximal correspondant au port logique de tranche ;
la condition prédéfinie de prêt de bande passante comprend : le débit réel de services pris en charge par le port logique de tranche est inférieur à un seuil de débit minimal correspondant au port logique de tranche.

2. Procédé selon la revendication 1, dans lequel l'extraction d'une bande passante d'une bande passante du port logique de prêt de bande passante selon une règle prédéfinie de prêt de bande passante et l'allocation de la bande passante extraite au port logique d'emprunt de bande passante (S1030) comprennent les étapes consistant à :
extraire de la bande passante du port logique de prêt de bande passante, selon une proportion prédéfinie de prêt de bande passante ou une quantité prédéfinie de prêt de bande passante, la proportion prédéfinie de prêt de bande passante ou la quantité prédéfinie de prêt de bande passante et allouer la bande passante extraite au port logique d'emprunt de bande passante ; ou
calculer une différence entre un débit réel de services pris en charge par le port logique de prêt de bande passante dans une période de temps prédéfinie et un seuil de débit minimal correspondant au port logique de prêt de bande passante ; calculer une bande passante correspondant à la différence ; et extraire la bande passante correspondant à la différence de la bande passante du port logique de prêt de bande passante et allouer la bande passante extraite au port logique d'emprunt de bande passante.

3. Procédé selon l'une quelconque des revendications 1 et 2, comprenant en outre les étapes consistant à :
après l'utilisation d'un port logique de tranche comme port logique d'emprunt de bande passante en réponse à la surveillance du fait que le port logique de tranche répond à une condition prédéfinie d'emprunt de bande passante (S1010),
déterminer une quantité d'emprunt de bande passante du port logique d'emprunt de bande passante ; et
arrêter l'extraction d'une bande passante d'une bande passante du port logique de prêt de bande passante selon une règle prédéfinie de prêt de bande passante et allouer la bande passante extraite au port logique d'emprunt de bande passante en réponse à la détection du fait qu'une bande passante totale extraite du port logique de prêt de bande passante correspond à la quantité d'emprunt de bande passante ou à la détection du fait que la bande passante a été extraite des bandes passantes de tous les ports logiques de prêt de bande passante selon la règle prédéfinie de prêt de bande passante.

4. Procédé selon l'une quelconque des revendications 1 à 3, dans lequel la recherche d'un port logique de tranche qui répond à une condition prédéfinie de prêt de bande passante pour agir en tant que port logique de prêt de bande passante (S1020) comprend les étapes consistant à :
sélectionner un d'au moins deux ports logiques de tranche en tant que port logique de prêt de bande passante en réponse à la recherche des au moins deux ports logiques de tranche qui répondent à la condition prédéfinie de prêt de bande passante ; ou
utiliser un port logique de tranche en tant que port logique de prêt de bande passante en réponse à la recherche du port logique de tranche qui répond à la condition prédéfinie de prêt de bande passante et arrêter la recherche du port logique de tranche qui répond à la condition prédéfinie de prêt de bande passante.

5. Procédé selon l'une quelconque des revendications 1 à 3, dans lequel la recherche, dans un port physique auquel appartient le port logique d'emprunt de bande passante, d'un port logique de tranche qui répond à une condition prédéfinie de prêt de bande passante pour agir en tant que port logique de prêt de bande passante (S1020) comprend les étapes consistant à :
rechercher, dans le port physique auquel appartient le port logique d'emprunt de bande passante, des ports logiques de tranche avec un débit réel de services pris en charge par le port logique de tranche inférieur à un seuil de débit minimal correspondant au port logique de tranche ; déterminer, parmi les ports logiques de tranche recherchés, un port logique de tranche sans prêt de bande passante ; et utiliser le port logique de tranche sans prêt de bande passante en tant que port logique de prêt de bande passante ; ou
rechercher, dans le port physique auquel appartient le port logique d'emprunt de bande passante, des ports logiques de tranche sans prêt de bande passante ; et rechercher, parmi les ports physiques de tranche sans prêt de bande passante, un port logique de tranche avec un débit réel de services pris en charge par le port logique de tranche inférieur à un seuil de débit minimal correspondant au port logique de tranche pour agir en tant que port logique de prêt de bande passante.

6. Procédé selon l'une quelconque des revendications 1 à 5, dans lequel le seuil de débit minimal correspondant au port logique de tranche est égal à n% d'un débit correspondant à une bande passante réelle actuelle du port logique de tranche, n étant supérieur à 0 et inférieur à 100 ; et le procédé comprenant en outre les étapes consistant à :
après l'extraction d'une bande passante d'une bande passante du port logique de prêt de bande passante selon une règle prédéfinie de prêt de bande passante et l'allocation de la bande passante extraite au port logique d'emprunt de bande passante (S1030),
détecter si un débit réel actuel de services pris en charge par le port logique de prêt de bande passante est supérieur à un seuil de débit minimal actuel correspondant au port logique de prêt de bande passante ; et
déterminer qu'un prêt de bande passante du port logique de prêt de bande passante n'est pas valide en réponse au jugement du fait que le débit réel actuel de services pris en charge par le port logique de prêt de bande passante est supérieur au seuil de débit minimal actuel correspondant au port logique de prêt de bande passante, et réclamer la bande passante prêtée par le port logique de prêt de bande passante.

7. Procédé selon l'une quelconque des revendications 1 à 6, comprenant en outre l'étape consistant à :
après l'extraction d'une bande passante d'une bande passante du port logique de prêt de bande passante selon une règle prédéfinie de prêt de bande passante et l'allocation de la bande passante extraite au port logique d'emprunt de bande passante (S1030),
retourner la bande passante allouée au port logique d'emprunt de bande passante au port logique de prêt de bande passante en réponse au déclenchement d'une condition prédéfinie de retour de bande passante.

8. Procédé selon la revendication 7, dans lequel la condition prédéfinie de retour de bande passante comprend au moins une des conditions suivantes :
première condition : le débit réel du port logique d'emprunt de bande passante est inférieur au seuil de débit minimal correspondant au port logique d'emprunt de bande passante ;
deuxième condition : le débit réel de services pris en charge par le port logique de prêt de bande passante est supérieur à un seuil de débit maximal actuel correspondant au port logique de prêt de bande passante ;
troisième condition : une limite de temps de prêt de bande passante a été atteinte ; et
quatrième condition : un réglage anormal d'une bande passante par le port physique est détecté.

9. Procédé selon la revendication 8, le procédé comprenant en outre, en réponse au fait que la condition prédéfinie de retour de bande passante comprend la troisième condition et que la troisième condition est déclenchée, l'étape consistant à :
avant le retour de la bande passante allouée au port logique d'emprunt de bande passante vers le port logique de prêt de bande passante,
déterminer que le débit réel de services pris en charge par le port logique de prêt de bande passante est supérieur ou égal au seuil de débit minimal actuel correspondant au port logique de prêt de bande passante.

10. Dispositif de communication, comprenant : un processeur (71), une mémoire (72) et un bus de communication (73),
le bus de communication (73) étant configuré pour une communication entre le processeur (71) et la mémoire (72) ; et
le processeur (71) étant configuré pour exécuter au moins un programme stocké dans la mémoire (72) pour mettre en oeuvre le procédé de réglage de bande passante selon l'une quelconque des revendications 1 à 9.

11. Support de stockage lisible par ordinateur stockant une instruction exécutable par ordinateur, utilisée pour réaliser le procédé de réglage de bande passante selon l'une quelconque des revendications 1 à 9 lorsqu'elle est exécutée sur un ordinateur.
